# EUROPEAN PATENT APPLICATION

(11) **EP 2 915 895 A2**
(43) Date of publication of application: **09.09.2015**
(21) Application number: 15157966.1
(22) Date of filing: 06.03.2015
(51) Int. Cl.: C22C 38/00, C22C 38/04, C22C 38/22, C22C 38/24, C22C 38/26, C22C 38/30, C22C 38/32, C22C 38/42, C22C 38/20, C22C 38/28, C22C 38/06, C22C 38/44, C22C 38/46, C22C 38/60, C22C 38/02, B29C 33/38, C21D 6/00, C21D 6/04, C21D 8/00

(54) **Steel for mold**

(30) Priority: 07.03.2014 JP 2014045098
(71) Applicant: Daido Steel Co.,Ltd., Nagoya Aichi 461-8581 (JP)
(72) Inventor: Kawano, Masamichi, Aichi 457-8545 (JP)
(74) Representative: Diehl & Partner GbR

(57) **Abstract**

The present invention relates to a steel for a mold, containing, on a % by mass basis, more than 0.27% to less than 0.36% of C, more than 0.07% to less than 0.40% of Si, more than 7.00% to less than 8.80% of Cr, more than 0.25% to less than 0.80% of Mo, more than 0.50% to less than 0.75% of V, more than 0.0005% to less than 0.05% ofN, and Mn, with the balance being Fe and inevitable impurities, in which an expression of "-0.1Cr + 1.10 < Mn < -0.1Cr + 1.50" is satisfied.

## Description

### TECHNICAL FIELD

The present invention relates to a die steel and a mold steel, and more specifically to a plastic injection mold die material used for forming a mold for injection molding of a resin material.

### BACKGROUND ART

It is necessary for a plastic mold die to have various excellent characteristics such as hardness, thermal conductivity, and the like. Patent Document 1 discloses a steel for a plastic molding mold which has high thermal conductivity, hardness, and corrosion resistance containing, on a % by mass basis, 0.22% to 0.35% of C; 0.01% to 0.40% of Si; 0.10% to 1.20% of Mn; 0.030% or less of P; 0.05% to 0.20% of Cu; 0.05% to 1.00% ofNi; 5.0% to 10.0% of Cr; 0.10% to 1.00% of Mo; more than 0.50% to 0.80% of V; 0.01% to 0.2% of N, 0.0100% or less of O; and 0.050% or less of Al with the balance being Fe and inevitable impurities.

Patent Document 1: JP-A-2010-174319

### SUMMARY OF THE INVENTION

As described above, the steel for a mold disclosed in Patent Document 1 has excellent heat resistance, hardness, and corrosion resistance. However, in recent years, steel for a mold has been required to have more diverse characteristics in response to diversification of a plastic molding process.

For example, due to high strengthening of a resin product, the number of the cases where hard glass fibers are mixed into a resin product has increased. In an injection molding of such a resin, abrasive wear of a mold becomes a serious problem because of hardness of the glass fibers. There is a possibility that the requirement for the dimension precision becomes less satisfied over time because the shape of a product is changed due to the abrasive wear of a mold. Accordingly, it becomes necessary for a mold to have high hardness, and as a result, to have high wear resistance. Further, since minute holes (pinholes) generated due to drop off of carbides or inclusions from a mold surface are unlikely to be formed and thus minutes defects such as gouge and the like are unlikely to be generated at the time of polishing as the mold has higher hardness, it is expected that mirror polishing properties of the mold become excellent.

When the surface of a mold is minutely uneven (wavy), the waviness is transferred to a resin product to degrade the smoothness of the surface of the resin product, and, as a result, the design properties are impaired. Accordingly, it is preferable that a mold after mirror polishing is free from waviness. Since the waviness is generated due to segregation of components, it is desired that the segregation is small in steel for a mold. Further, in the case where embossing processing that forms a leather-like pattern by corroding the surface of a mold by using a chemical is performed for the purpose of transferring the leather-like pattern to the surface of a resin product, since uneven distribution of chemical components due to the segregation causes a difference in the degree of embossing (unevenness in embossing), the influence of the segregation in steel for a mold on the design properties of the resin product becomes particularly greater.

In addition, with enlargement of a resin product in recent years, the size of a mold becomes larger. There is a tendency that the quenching rate (the cooling rate at the time of quenching) becomes small when the size of a mold is increased. Further, with the globalization of areas for production, the number of cases where quenching of a mold is performed in an environment in which equipment or techniques of a heat treatment are not sufficient has increased. In such a case, the quenching rate of a mold decreases in many cases. When the quenching rate of a mold decreases, perlite is easily precipitated at the time of quenching in a case of steel with degraded hardenability. When perlite is precipitated, carbides in the perlite are separated therefrom at the time of mirror polishing of a mold and thus perlite parts are preferentially shaved and pinholes are easily generated. The pinholes are transferred to a resin product as a projected structure to impair the design properties of the surface of the resin product. Further, even in the case where the vicinity of the surface of a mold has a relatively high quenching rate and perlite is unlikely to be precipitated therein, the inside of the mold has a lower quenching rate than that in the vicinity of the surface thereof and is in a state in which perlite is easily precipitated. The mechanical stress is repeatedly applied to a mold in use with mold clamping or resin injection. In a metal fatigue caused by application of such a stress, a fracture from the inside of the mold tends to easily occur because the perlite precipitated in the inside of the mold becomes a starting point of the fracture. In addition, a water cooling circuit is provided in the inside of a mold for injection molding in many cases in order to rapidly cool and solidify a resin. In the case where perlite is precipitated on the surface of the water cooling circuit, the perlite is also likely to become a starting point of cracks. In this manner, from a viewpoint of securing mirror polishing properties of a mold or suppressing a fracture thereof, it is necessary that steel for a mold has improved hardenability and precipitation of perlite is suppressed.

Further, in the case where a water cooling circuit is provided in a mold as described above, when steel for the mold has low corrosion resistance, there is a possibility that the amount of water flowing decreases because the water cooling circuit becomes rusty and narrowed and thus the cooling capability is impaired. Further, there is also a possibility that cracks are generated because a portion in which rust has deeply eaten away becomes a starting point. Consequently, for the purpose of maintaining cooling capability and preventing corrosion and cracks, steel for a mold needs to have high corrosion resistance.

Further, in a plastic mold die, it is important to suppress precipitation of δ-ferrite in addition to perlite for the purpose of securing mirror polishing properties and suppressing a fracture. When δ-ferrite is precipitated during a process of solidification and hot processing, δ-ferrite remains after quenching and tempering. Since the portion of δ-ferrite is softer than martensite in the vicinity thereof, abrasive grains used for polishing are easily stuck thereto and minute defects such as gouge and the like are easily generated during the time of polishing. The stuck abrasive grains or generated gouge degrade the surface roughness of a mold and impair the mirror polishing properties. Further, since the interface between δ-ferrite and a mother phase acts as a starting point or a propagation path of cracks, cracks are easily generated in steel for a mold in which δ-ferrite is present. Moreover, since δ-ferrite remains in a state of being extended by processing in many cases, anisotropy of mechanical properties becomes large in a mold in which δ-ferrite is present and cracks are easily generated against the force in a specific direction. From the viewpoint described above, it is necessary to make δ-ferrite difficult to be precipitated in terms of securing mirror polishing properties and suppressing the possibility of a fracture.

Moreover, conventionally, steel for a mold has been required to have a high impact value which is an index of cracking resistance, in order to suppress cracking of a mold. Particularly, in recent years, with the enlargement of a mold and the possibility of performing quenching in an environment in which equipment and the techniques are not sufficient as described above, it is necessary for steel for a mold to have a high impact value even in the case where the quenching rate is small (at the time of slow quenching).

In addition, high-cycle production (reducing the time necessary for one cycle molding) is required for injection molding of a resin. That is, it is necessary to rapidly cool and solidify a resin injected inside of a mold. For this, it is preferable that the mold is cooled down rapidly. Therefore, steel for a mold is required to have high thermal conductivity.

As described above, in recent years, with diversification of resin products to be molded and diversification of production environments of a mold, steel constituting a mold for injection molding of a resin material is required to have various characteristics. Here, an object to be solved by the present invention is to provide steel for a mold having high hardness, resistance to segregation, resistance to precipitation of perlite, high corrosion resistance, resistance to precipitation of δ-ferrite, a high impact value at the time of slow quenching, and high thermal conductivity.

In order to solve the above problems, the present invention provides a steel for a mold, containing, on a % by mass basis:
more than 0.27% to less than 0.36% of C;
more than 0.07% to less than 0.40% of Si;
more than 7.00% to less than 8.80% of Cr;
more than 0.25% to less than 0.80% of Mo;
more than 0.50% to less than 0.75% of V;
more than 0.0005% to less than 0.05% of N; and
Mn,
with the balance being Fe and inevitable impurities,
in which an expression of "-0.1Cr + 1.10 < Mn < -0.1Cr + 1.50" is satisfied.

The steel for a mold preferably satisfies an expression of "N < -0.04V + 0.050".

The steel for a mold may further contain one or two kinds selected from, on a % by mass basis:
more than 0.10% to 4.00% or less of W and
more than 0.10% to 3.00% or less of Co.

The steel for a mold may further contain one or more kinds selected from, on a % by mass basis:
more than 0.004% to 0.100% or less ofNb;
more than 0.004% to 0.100% or less of Ta;
more than 0.004% to 0.100% or less of Ti; and
more than 0.004% to 0.100% or less ofZr.

The steel for a mold may further contain, on a % by mass basis:
more than 0.10% to less than 1.2% ofAl.

The steel for a mold may further contain one or two kinds selected from, on a % by mass basis:
more than 0.30% to 3.5% or less ofNi and
more than 0.30% to 1.5% or less of Cu.

The steel for a mold may further contain, on a % by mass basis:
more than 0.0001% to 0.0050% or less of B.

The steel for a mold may further contain one or more kinds selected from, on a % by mass basis:
more than 0.003% to 0.050% or less of S;
more than 0.0005% to 0.2000% or less of Ca;
more than 0.03% to 0.50% or less of Se;
more than 0.005% to 0.100% or less of Te;
more than 0.01% to 0.50% or less ofBi; and
more than 0.03% to 0.50% or less of Pb.

The steel for a mold preferably has a thermal conductivity at 25°C of 20 W/m/K or more.

By including the above-described component compositions, the steel for a mold according to the present invention has all of high hardness, resistance to segregation, resistance to precipitation of perlite, high corrosion resistance, resistance to precipitation of δ-ferrite, a high impact value at the time of slow quenching, and high thermal conductivity in good balance.

Here, in the case where an expression of "N < -0.04 V + 0.050" is satisfied, the steel for a mold has a particularly high impact value.

Further, in the case where the steel for a mold contains one or more kinds selected from the above-described specific amounts of W and Co, particularly high hardness can be easily achieved.

In addition, in the case where the steel for a mold contains one or more kinds selected from the above-described specific amounts ofNb, Ta, Ti, and Zr, coarsening of austenitic grains is suppressed even when the heating temperature or the heating time becomes longer at the time of quenching increases and thus a high impact value or mirror polishing properties are easily maintained.

Further, in the case where the steel for a mold contains the above-described specific amount of Al, a nitride of Al formed by bonding to N atoms contained in the steel for a mold can suppress the movement of austenitic grain boundaries and grain growth occurring due to the movement thereof. Moreover, since the nitride of Al contributes to strengthening of precipitation of the steel for a mold, the above-described specific amount of Al can contribute to increasing the strength of the surface of a mold by being applied a nitriding treatment and thus the wear resistance of the mold can be enhanced.

In addition, in the case where the steel for a mold contains one or two kinds selected from the above-described specific amounts ofNi and Cu, it is possible to improve the hardenability of the steel for a mold.

Further, in the case where the steel for a mold contains the above-described specific amount of B, the effect of further improving the hardenability of the steel for a mold can be obtained, too.

Further, in the case where the steel for a mold contains one or more kinds selected from the above-described specific amounts of S, Ca, Se, Te, Bi, and Pb, the machinability is improved and the machining properties are easily secured in the steel for a mold whose content of Si having an effect of improving the machinability is smaller than those of other kinds of conventional steels.

Moreover, in the case where the thermal conductivity of the steel for a mold at 25°C is 20W/m/K or more, since a resin can be rapidly cooled and then solidified at the time of injection molding of a resin material, the efficiency of the injection molding can be improved.

### BRIEF DESCRIPTION OF THE DRAWINGS

FIG. 1 illustrates graphs respectively showing relationships between the contents of Mn and Cr in (a) corrosion resistance, (b) ferrite precipitation, (c) impact values at the time of slowing quenching, and (d) thermal conductivity.
FIG. 2 is a graph showing a prescribed range of the contents of Mn and Cr.
FIG. 3 is a graph showing a relationship between the contents of N and V in impact values at the time of slowing quenching.
FIG. 4 is a graph showing a preferred range of the contents of N and V.

### DETAILED DESCRIPTION OF THE INVENTION

Hereinafter, a steel for a mold according to an embodiment of the present invention will be described in detail.

The steel for a mold according to the embodiment of the present invention contains elements described below and the balance is formed of Fe and inevitable impurities. The kinds, the component ratios, and the reason for restriction of additive elements are as follows. Further, the unit of the component ratio is % by mass basis.

### 0.27% < C < 0.36%

C improves the hardness of the steel for a mold by being solid-dissolved in a mother phase at the time of quenching and organized as a martensite structure. Further, C forms carbides and carbonitrides together with Cr, Mo, V and the like and then improves the strength of the steel for a mold.

By adjusting the content of C to be more than 0.27%, high hardness required for use as a mold is achieved after an appropriate heat treatment. From a viewpoint of obtaining sufficient wear resistance and mirror polishing properties, it is necessary for a mold to have a hardness of approximately 47 HRC or more and preferably 49 HRC or more. When the content of C is extremely small, δ-ferrite is easily precipitated and this leads to a decrease in mirror polishing properties and the possibility of a fracture of a mold, which is not preferable. When the content of C is adjusted to be more than 0.27%, precipitation of δ-ferrite can be effectively suppressed. From a viewpoint of the balance of various characteristics, the content of C is preferably more than 0.29%.

Meanwhile, when the content of C becomes extremely large, carbides containing Cr or Mo become easily formed and the amount of Cr and Mo solid-dissolved in a mother phase decreases, and thus the corrosion resistance is impaired. In addition, when C is excessively contained, the weldability of the steel of a mold is also impaired. For these reasons, the content of C is adjusted to be less than 0.36%. From a viewpoint of the balance of various characteristics, the content of C is preferably less than 0.34%.

### 0.07% < Si < 0.40%

Si has an effect as a deoxidizing agent and an effect of improving machinability at the time of producing a mold. The content of Si is adjusted to be more than 0.07% for the purpose of securing the machinability required for a mold. In a case where the content of Si is adjusted to be less than or equal to 0.07%, the machinability is exceedingly impaired and high hardness (approximately 49 HRC) required for a mold becomes difficult to be achieved even after a heat treatment is carried out. From a viewpoint of the balance with other characteristics, the content of Si is preferably more than 0.09%.

Meanwhile, when the content of Si becomes excessively large, the thermal conductivity of the steel for a mold becomes impaired and in addition, δ-ferrite tends to be easily generated. From a viewpoint of preventing these problems, the content of Si is set to be less than 0.40%. Moreover, when the content of Si is adjusted to be less than 0.40%, excellent descaling properties is secured at the time of performing hot processing on the steel for a mold and an increase of the hardness of a scale is suppressed, and thus it is possible to prevent tools used for the processing from significantly abraded by the scale. From a viewpoint of the balance with other characteristics, the content of Si is preferably less than 0.36%.

### 7.00% < Cr < 8.80%

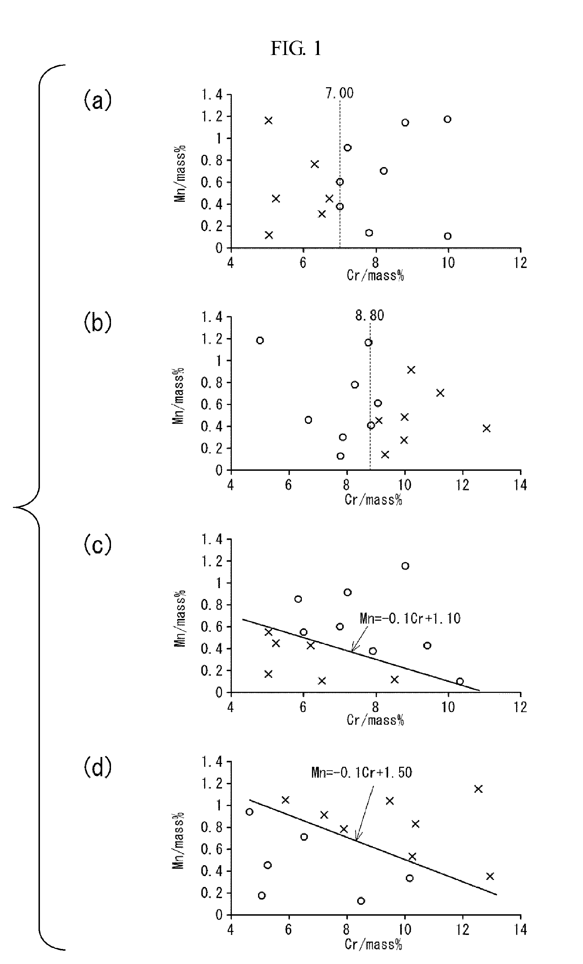

Cr is an element of improving the corrosion resistance by forming a passive film. (a) of FIG. 1 shows a relationship between the contents of Mn and Cr in the corrosion resistance. Here, a steel material containing 0.32% of C, 0.23% of Si, 0.60% of Mo, 0.60% of V, and 0.015% of N as basic components and whose contents of Mn and Cr are changed is evaluated in the corrosion resistance by performing a wetting test. That is, after test pieces subjected to mirror polishing are left to stand in an environment of a humidity of 98% and a temperature of 50°C for 24 hours, the rust situation is visually observed. A case where the rust is not almost generated or slightly generated is indicated as "o" and a case where the rust is quite noticeable or largely generated is indicated as "x" in (a) of FIG. 1. According to (a) of FIG. 1, under the condition in which the content of Cr is more than 7.00% over the entire area of the content of Mn, "o" is obtained and high corrosion resistance is achieved.

When the content of Cr is extremely small, the steel for a mold are degraded in spheroidizing annealing properties and becomes easily hardened after the spheroidizing annealing under the condition in which particularly the content of Mn is large, and this leads to degradation of machining properties of the steel for a mold. However, such a problem hardly occurs when the content of Cr is more than 7.00%. From a viewpoint of the balance of various characteristics, the content of Cr is preferably more than 7.30%.

Meanwhile, when the content of Cr is extremely large, δ-ferrite is easily precipitated. (b) of FIG. 1 shows a relationship between the contents of Mn and Cr in precipitation of δ-ferrite. Here, in regard to a steel material containing 0.28% of C, 0.39% of Si, 0.79% of Mo, 0.74% of V, and 0.002% of N as basic components and whose contents of Mn and Cr are changed, the presence or absence of precipitation of δ-ferrite is shown. A case where δ-ferrite is not observed is indicated as "o" and a case where δ-ferrite is observed is indicated as "x" in (b) of FIG. 1. According to (b) of FIG. 1, under the condition in which the content of Cr is less than 8.80% over the entire area of the content of Mn, "o" is obtained and δ-ferrite is unlikely to be precipitated.

Moreover, when the content of Cr is extremely large, perlite is extremely easily precipitated under the condition in which the content of Mn is small and the content of C is large. However, such a problem hardly occurs when the content of Cr is less than 8.80%. From a viewpoint of the balance of various characteristics, the content of Cr is preferably less than 8.60%.

### Mn

The content of Mn has an influence on the impact value in the case where the quenching rate is low (at the time of slow quenching) and on the thermal conductivity, but the degree of the influence also depends on the content of Cr. In the steel for a mold according to the present embodiment, the contents of Mn and Cr satisfy a relationship of an expression of "-0.1Cr + 1.10 < Mn < -0.1Cr + 1.50."

When the contents of Cr and Mn are extremely small, coarse bainite is easily precipitated at the time of slow quenching and the impact value becomes lowered. (c) of FIG. 1 shows a relationship between the contents of Cr and Mn in the impact value at the time of slow quenching. Here, in regard to a steel material containing 0.33% of C, 0.25% of Si, 0.58% of Mo, 0.59% of V, and 0.012% of N as basic components and whose contents of Mn and Cr are changed, whether a high impact value can be obtained is shown. Specifically, quenching of a mold having a large cross section is simulated by heating a steel material having a dimension of 11 mm x 11 mm x 60 mm at 1,030°C, cooling at a rate of 50°C/min in a temperature region of from 1,030°C to 550°C, and cooling at a rate of 2°C/min in a temperature region of from 550°C to 100°C. Incidentally, the cooling rate in the inside of a mold during quenching of a general mold is from 5°C/min to 150°C/min in the temperature range of from 1,030°C to 550°C and 1°C/min to 30°C/min in the temperature range of from 550°C to 100°C. The above-described cooling rates are considerably slow in these ranges. Further, a steel material to which quenching is applied as such is refined to have a hardness of 52 HRC by carrying out tempering and then processed into a test piece having an approximate dimension of 10 mm x 10 mm x 55 mm having a notch (the radius of an R portion at a tip end being 1 mm). An impact value E (J/cm²) at room temperature (25°C) is measured by performing a Charpy impact test by using the test piece. In (c) of FIG. 1, a case where E is more than or equal to 20 is indicated as "o" and a case where E is less than 20 is indicated as "x". The boundary value with E being 20 is an indication of an impact value required for avoiding cracks in a mold. According to (c) of FIG. 1, under the condition in which an expression of "Mn (%) > -0.1Cr (%) + 1.10 (%)" is satisfied, "o" is obtained and a high impact value is achieved.

Meanwhile, when the contents of Cr and Mn are extremely large, the thermal conductivity of the steel for a mold is impaired. (d) of FIG. 1 shows a relationship between the contents of Cr and Mn in the thermal conductivity. Here, in regard to a steel material having 0.35% of C, 0.39% of Si, 0.78% of Mo, 0.74% of V, and 0.018% ofN as basic components and whose contents of Mn and Cr are changed, measurement results of thermal conductivity are shown. Specifically, after a test piece is refined in the same manner as that of the impact test, thermal conductivity λ (W/m/K) at 25°C is measured according to a laser flash method. In (d) of FIG. 1, a case where λ is more than or equal to 20 is indicated as "o" and a case where λ is less than 20 is indicated as "x". The boundary value of λ being 20 is an indication of a thermal conductivity required for rapid cooling of a resin in a mold. According to (d) of FIG. 1, under the condition in which an expression of "Mn (%) < -0.1Cr (%) + 1.50 (%)" is satisfied, "o" is obtained and the high thermal conductivity is achieved.

In addition, when the contents of Cr and Mn are extremely large, segregation significantly occurs in the steel for a mold and the mirror polishing properties and embossing processing properties of a mold are degraded. In this meaning, it is preferable that the contents of Cr and Mn are small in the range in which the impact value at the time of slow quenching can be secured. As described above, when relationships of "Cr < 8.80%" and "Mn < -0.1Cr + 1.50" are satisfied, the mirror polishing properties and the embossing processing properties can be sufficiently secured.

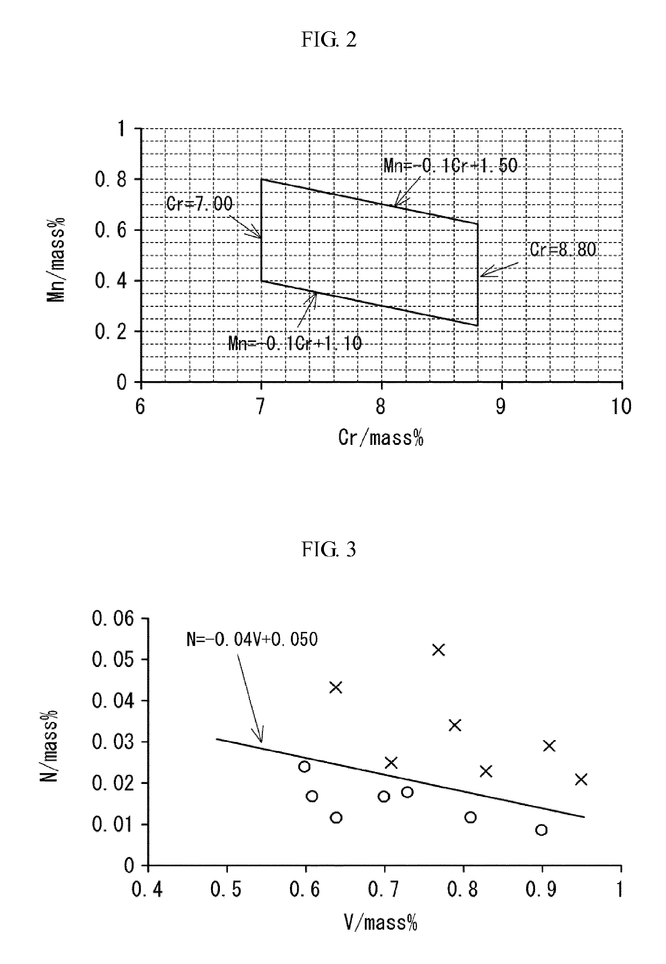

FIG. 2 collectively shows the range of the content of Cr and the range of the content of Mn in the relationship with the content of Cr prescribed above. When the contents of Cr and Mn fall within the range surrounded by a rectangle of the graph shown in FIG. 2, the steel for a mold is excellent in all of corrosion resistance, resistance to precipitation of δ-ferrite, the impact value at the time of slow quenching, and the thermal conductivity, and various characteristics required as a mold for injection molding of a resin material are satisfied in a well-balanced manner.

### 0.25% < Mo < 0.80%

Mo is an element that improves the corrosion resistance. In addition, Mo contributes to second hardening of a material by being bonded to C. When the content of Mo is more than 0.25%, the high hardness required for a mold can be stably obtained when a heat treatment is carried out. From a viewpoint of the balance with other characteristics, it is preferable that the content of Mo is more than 0.35%.

Meanwhile, when the content of Mo is extremely large, δ-ferrite is easily precipitated and the fracture toughness is difficult to be secured. The material cost of the steel for a mold is also increased. To avoid these problems, the content of Mo is set to be less than 0.80%. From a viewpoint of the balance with other characteristics, it is preferable that the content of Mo is less than 0.75%.

### 0.50% < V < 0.75%

V forms carbonitrides by being bonded to C and N. The carbonitrides contribute to suppression of coarsening of austenitic grains at the time of quenching and improve the impact value. When the content of V is more than 0.50%, the coarsening of austenitic grains at the time of quenching is effectively suppressed and the impact value required for a mold is easily achieved. From a viewpoint of the balance with other characteristics, it is preferable that the content of V is more than 0.52%.

Meanwhile, when the content of V is extremely large, the effect of suppressing the coarsening of austenitic grains is saturated and this leads to an increase in cost. In addition, when a large amount of V is contained, δ-ferrite and coarse carbonitrides are easily generated. Suppressing the content of V which is a rare element is important from a viewpoint of saving resources as well as reducing the cost. From these viewpoints, the content of V is set to be less than 0.75%. From a viewpoint of the balance with other characteristics, it is preferable that the content of V is less than 0.70%.

### 0.0005% < N < 0.05%

Since N increases the solid-dissolution temperature of remaining carbides (and carbonitrides) at the time of quenching, the remaining carbides (and carbonitrides) increase as the content of N increases. Therefore, the coarsening of austenitic grains at the time of quenching is suppressed and austenitic grains can be refined. In order to sufficiently obtain these effects, the content of N is set to be more than 0.0005%.

Meanwhile, when the content of N is extremely large, the effect of refining austenitic grains is saturated and the refining cost required to increase the content of N increases. From these viewpoints, the content of N is set to be less than 0.05%.

As described above, when V and N are contained in the steel for a mold, carbides and carbonitrides are easily formed. However, when coarse carbides and carbonitrides are formed, since they act as a starting point of cracks to easily generate cracks, the impact value of the steel for a mold decreases. A decrease in the impact value easily occurs particularly in a case where the quenching rate is low. In order to avoid the decrease of the impact value, it is preferable that the upper limit of the content of N is determined by the relationship between the contents of V and N. Specifically, it is preferable that an expression of N (%) < -0.04V (%) + 0.050 (%)" is satisfied. FIG. 3 shows a relationship between the contents of N and V in the impact value at the time of slow quenching. Here, in regard to a steel material containing 0.35% of C, 0.39% of Si, 0.54% of Mn, 7.03% of Cr, and 0.78% of Mo as basic components and whose contents of N and V are changed, it is shown the results of evaluating the impact value at the time of slow quenching, which is obtained in accordance with the method and criteria which are the same as those in the case of (c) of FIG. 1 which is obtained by changing the contents of Cr and Mn. According to FIG. 3, under the condition in which an expression of "N < -0.04V + 0.050" is satisfied, "o" is obtained and a high impact value is achieved.

Moreover, in a case where the contents of V and N are large and coarse carbides or carbonitrides are generated, not only the impact value decreases, but also pinholes are generated due to drop off of the carbides or carbonitrides therefrom at the time of polishing and the mirror polishing properties of a mold are degraded. In this meaning, it is preferable that the contents of V and N are small in the range in which effects of refining austenitic grains can be achieved. Degradation of mirror polishing properties can be suppressed when an expression of "N < -0.04V + 0.050" is satisfied.

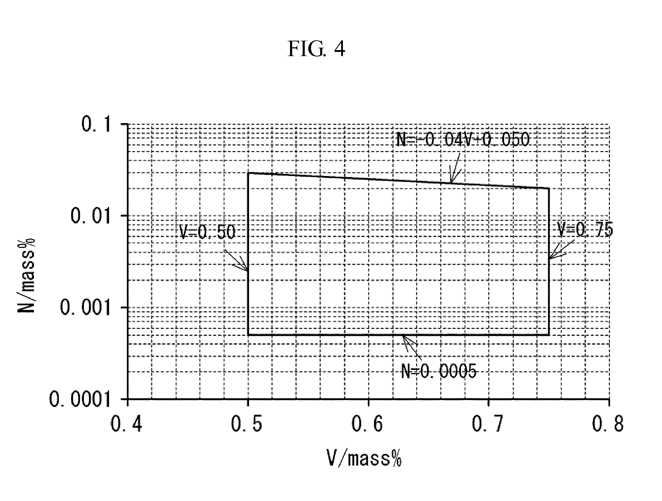

FIG. 4 collectively shows a preferred range of the contents of V and N described above. When the contents of V and N fall within the range surrounded by a rectangle of the graph shown in FIG. 4, both the acceleration of refinement of austenitic grains and suppression of generation of coarse carbides and carbonitrides are achieved and thus, a high impact value and mirror polishing properties can be obtained

The steel for a mold according to the present embodiment contains the above-described predetermined amounts of C, Si, Cr, Mn, Mo, V, and N, with the balance is formed of Fe and inevitable impurities. Here, the following elements are assumed as the inevitable impurities. That is, it is assumed that the inevitable impurities include 0 to 0.05% or less of P; 0 to 0.003% or less of S; 0 to 0.30% or less of Cu; 0 to 0.30% or less of Ni; 0 to 0.10% or less of Al; 0 to 0.10% or less of W; 0 to 0.01% or less of O; 0 to 0.10% or less of Co; 0 to 0.004% or less of Nb; 0 to 0.004% or less of Ta; 0 to 0.004% or less of Ti; 0 to 0.004% or less of Zr; 0 to 0.0001% or less of B; 0 to 0.0005% or less of Ca; 0 to 0.03% or less of Se; 0 to 0.005% or less ofTe; 0 to 0.01% or less of Bi; 0 to 0.03% or less of Pb; and 0 to 0.02% or less of Mg.

The steel for a mold according to the present embodiment may optionally contain one or more kinds of elements selected from the following elements in addition to the above-described essential elements. That is, the steel for a mold according to the present embodiment may consist of, on a % by mass basis: 0.27% < C < 0.36%, 0.07% < Si < 0.40%, 7.00% < Cr < 8.80%, 0.25% < Mo < 0.80%, 0.50%< V < 0.75%, and 0.0005% < N < 0.05%; and Mn, with the balance being Fe and inevitable impurities, in which an expression of "-0.1Cr + 1.10 < Mn < -0.1 Cr + 1.50" is satisfied, but may optionally contain one or more kinds of elements selected from the following elements. The component ratios and the reason for restriction of these elements are as follows.

### 0.10% < W ≤ 4.00% and 0.10% < Co ≤ 3.00%

W increases the strength of the steel for a mold with precipitation of carbides. In addition, Co increases the strength by being solid-dissolved in a mother phase and contributes to precipitation hardening through the change in the form of carbides. Since the steel for a mold according to the present embodiment contains relatively large amount of Cr, softening resistance is low. Therefore, high strength is difficult to be secured in a case where the tempering temperature is high. Thus, the strength can be secured by adding W or Co even in the case where the tempering temperature is high. The lower limits of the contents of W and Co are determined as the contents having effects of securing the strength and the upper limits thereof are determined from viewpoints of saturation of characteristics and suppression of an increase in cost. The particularly preferred ranges of the contents thereof are respectively 0.30% or more to 3.00% or less of W and 0.30% or more to 2.00% or less of Co.

### 0.004% < Nb ≤ 0.100%, 0.004% < Ta ≤ 0.100%, 0.004% < Ti ≤ 0.100%, and 0.004% < Zr ≤ 0.100%

Nb, Ta, Ti, and Zr are precipitated as minute precipitates and capable of suppressing coarsening of austenitic crystal grains. When the heating temperature increases or the heating time elongates at the time of quenching or heat treatment due to unexpected equipment troubles or the like, there is a possibility that coarsening of austenitic crystal grains is promoted and various characteristics are degraded. In order to prepare for such a case, it is preferable to add one or more kinds selected from Nb, Ta, Ti, and Zr. The lower limits of the contents of respective elements are determined as the contents capable of obtaining effects of suppressing coarsening of austenitic crystal grains and the upper limits thereof are determined from a viewpoint of suppressing a decrease of the impact value or mirror polishing properties due to excessive precipitation of carbides, nitrides, or oxides. These elements also have effects of suppressing formation of BN as described below.

### 0.10% < Al < 1.2%

Al forms AlN by being bonded to N and has an effect of suppressing the grain growth due to the movement of austenitic crystal grains. Accordingly, Al contributes to suppressing of coarsening of the austenitic crystal grains similar to Nb, Ta, Ti, and Zr as described above. Further, since Al forms nitrides in steel and contributes to strengthening precipitation, Al has an action of increasing the surface hardness when a nitriding treatment is applied to the steel for a mold. Therefore, it is particularly effective to add Al in a mold to which the nitriding treatment is performed for imparting high wear resistance. The lower limit of the content ofAl is determined as the content capable of obtaining these effects and the upper limit thereof is determined from a viewpoint of suppressing a decrease in mirror polishing properties caused by generation of coarse Al oxides.

### 0.30% < Ni ≤ 3.5% and 0.30% < Cu ≤ 1.5%

Ni and Cu have effects of stably generating austenite in steel and improving hardenability. As described above, with enlargement of a resin product in recent years, the size of a mold for molding tends to be enlarged. Since a large mold is difficult to be cooled, when a mold is formed by using the steel for a mold with low hardenability and quenching is performed, there is a possibility that perlite or coarse bainite is precipitated during quenching and various characteristics are degraded. Although the steel for a mold according to the present embodiment has extremely high hardenability by means of suppressing precipitation of ferrite and perlite, having a high impact value or the like, it is effective that the hardenability are further improved by adding Ni or Cu in order to secure high hardenability even in a case where an extremely large mold is formed and quenching is performed at a low cooling rate. Further, Ni has an effect of being precipitated as an intermetallic compound by being bonded to Al to increase the hardness. Meanwhile, Cu has an effect of increasing the hardness due to age precipitation. The lower limits of the contents of respective elements are determined as the contents capable of obtaining an effect of improving the hardenability and the upper limits thereof are determined from a viewpoint of suppressing a decrease of mirror polishing properties due to segregation. The particularly preferred ranges of the contents thereof are respectively 0.50% or more to 3.0% or less of Ni and 0.50% or more to 1.2% or less of Cu. Further, Ni and Cu also have an effect of making δ-ferrite difficult to be precipitated.

### 0.0001% < B ≤ 0.0050%

When B is added, the hardenability of the steel for a mold can be further improved. The lower limit of the content thereof is determined so as to be able to obtain the effect of improving the hardenability. However, when B forms BN by being bonded to N, the effect of improving the hardenability is impaired. Therefore, B needs to be present alone in the steel. From a viewpoint of suppressing the formation of BN, the upper limit of the content of B is determined. The formation of BN can be suppressed by allowing elements whose affinity for N is stronger than the affinity for B to form nitrides. Examples of such elements include Nb, Ta, Ti, and Zr. The effect of suppressing the formation of BN by these elements can be obtained in an amount of a level in which these elements are contained as inevitable impurities. However, the formation of BN can be effectively suppressed by intentionally adding these elements whose contents are in the range (more than 0.004% to 0.100% or less) as described above particularly in a case where the amount of N is large.

### 0.003% < S ≤ 0.050%, 0.0005% < Ca ≤ 0.2000%, 0.03% < Se ≤ 0.50%, 0.005% < Te ≤ 0.100%, 0.01% < Bi ≤ 0.50%, and 0.03% < Pb ≤ 0.50%

All of S, Se, Te, Ca, Pb, and Bi have an effect of improving the machinability of the steel for a mold. Since the steel for a mold according to the present embodiment has relatively small content of Si as compared to conventional steel for a mold, the machining properties are not so high. The machinability can be improved by adding these elements thereto. The lower limits of the contents of respective elements are determined as the contents capable of obtaining the effect of improving machinability. Meanwhile, when these elements are excessively added, the effect of improving machinability is saturated and the hot processing properties are degraded, and the impact value and the mirror polishing properties are impaired. The upper limits of the contents thereof are determined from a viewpoint of avoiding degradation of these characteristics.

The steel for a mold according to the present embodiment contains the above-described essential elements and further optionally contains additive elements. Therefore, it possesses respective characteristics of high hardness, resistance to segregation, resistance to precipitation of perlite, high corrosion resistance, resistance to precipitation of δ-ferrite, a high impact value at the time of slow quenching, and high thermal conductivity in a well-balanced manner. In this manner, it is possible to provide a mold satisfying various requirements in recent years in the injection forming process of a resin material and in the producing process of a mold.

Since the steel for a mold according to the present embodiment has high hardness, high wear resistance can be obtained when the steel is made into a mold. This is advantageous particularly in the case where hard materials such as glass fibers are mixed into a resin material. In addition, since the steel for a mold has high hardness, the mirror polishing properties of a mold are improved and damaging of the design properties of a product caused when a minute uneven structure is transferred to the resin product is prevented. The hardness of the steel for a mold can be adjusted to some extent by conditions of a heat treatment, but it is preferable that the mold for injection molding of a resin to which a hard material is to be mixed has a hardness of 47 HRC or more and more preferable that the mold has a hardness of 49 HRC or more as described above. When a mold has the above-described composition, such hardness becomes easy to be stably achieved after a heat treatment is carried out.

Moreover, since the steel for a mold according to the present embodiment has not only high hardness but also small segregation, high mirror polishing properties are provided. Further, in the case where the surface of the mold is subjected to embossing processing, embossing unevenness is hardly generated since segregation is small. The embossing unevenness is generated due to the generation of a difference in corrosiveness between regions at the time of contact with a chemical solution, caused by segregation.

The fact that perlite is unlikely to be precipitated influences the improvement of the mirror polishing properties of a mold. Further, since perlite is unlikely to be precipitated, a mold is prevented from a fracture whose starting point is perlite. Perlite is particularly easily precipitated in a case where the quenching rate is small. However, since the precipitation of perlite is suppressed by the effect of the composition of the steel for a mold, perlite is unlikely to be precipitated even when a mold is enlarged and the quenching rate becomes small and thus, high mirror polishing properties and high hardenability are secured.

Further, since the steel for a mold has high corrosion resistance, even in a case where a water cooling circuit is provided in a mold, generation of corrosion in the mold is suppressed and effects of maintaining cooling capability and preventing cracks due to corrosion are achieved.

The resistance to precipitation of δ-ferrite has effects of improving the mirror polishing properties and preventing cracks of a mold. Further, since the mold has not only the resistance to precipitation of δ-ferrite but also a high impact value, cracking of the mold is suppressed. Particularly, with the enlargement of a mold and diversification of production environments of a mold, the quenching rate of a mold becomes small in many cases. Even in a case where such slow quenching is carried out, since a mold having a high impact value, cracking is prevented.

Finally, since the steel for a mold has high thermal conductivity, an injected resin material can be rapidly solidified at the time of injection molding of a resin. In this manner, it is possible to respond to a requirement for high-cycle production in injection molding, which has grown in recent years. Specifically, it is preferable that the thermal conductivity at 25°C is more than or equal to 20 W/m/K. The thermal conductivity of the steel for a mold can be evaluated by means of a laser flash method.

Since the steel for a mold according to the present embodiment has the above-described characteristics, the steel can be suitably used as a mold for injection molding of various plastics. Further, the steel can exhibit high performance when used for purposes other than injection molding of plastic, such as molding or processing of rubber; cold press molding of a steel plate; and a hot stamp of a steel plate (also referred to as a press quench or a die quench). Further, for the purpose of further improving the hardness or the mirror polishing properties, it is effective that various surface modifications are applied to the steel for a mold according to the present embodiment, such as shot blasting; sand blasting; nitriding; physical vapor deposition (PVD); chemical vapor deposition (CVD); and plating.

The steel for a mold according to the present embodiment described above can be suitably produced, for example, as described below. That is, first, steel having the above-described chemical composition is melted in a vacuum induction furnace or the like to cast into an ingot. Next, the obtained ingot is subjected to hot forging and/or hot rolling and then adjusted to be a steel material having a required dimension.

In addition, one or more kinds of heat treatments are performed as necessary. Examples of the kind of the heat treatment include quenching, tempering, a sub-zero treatment, and a spheroidizing annealing treatment. Specifically, examples of quenching or tempering include a quenching that cools a mold after heating the mold in a temperature range of 1,000°C to 1,200°C for 0.5 hours to 1.5 hours. As for the cooling rate, a method of cooling at about 5°C/min to 150°C/min in a temperature range of 1,030°C to 550°C and cooling at about 1°C/min to 30°C/min in a temperature range of 550°C to 100° can be exemplified in addition to rapid cooling. A method of performing quenching, and thereafter performing a sub-zero treatment at a temperature of, for example, -196° or -76°C for 0.5 hours to 1 hour as necessary, and further performing heating at a temperature of from 200°C to 700°C for 0.5 hours to 1.5 hours and performing air-cooling to conduct tempering a mold, can be exemplified. In addition, as the spheroidizing annealing treatment, specifically, a method of performing heating a mold at a temperature of from 850°C to 950°C for 3 hours to 5 hours, cooling it in a furnace to around 600°C at a rate of 10°C/hour to 40°C/hour, and then air-cooling the mold, can be exemplified.

### EXAMPLES

The present invention will be described in detail with reference to Examples.

Steels for a mold having the component compositions (unit: % by mass) listed in Tables 1 and 2 were respectively prepared. Specifically, steels having respective composition ratios were melted in a vacuum induction furnace to cast into 7 tons of ingots. Then, a block having a cross section with a shape of a square having a dimension of 300 mm x 700 mm was produced by performing hot forging. Further, the obtained block was subjected to normalizing of heating to 1,050°C and rapidly cooling and subjected to tempering by heating at 700°C. In addition, the block was subjected to annealing by heating at 930°C and gradually cooling.

Test pieces were cut out from the vicinity of the center of the thus obtained blocks formed of respective steels for a mold, and tests for evaluating respective characteristics of the tempering hardness, the resistance to precipitation of perlite, the impact value, the corrosion resistance, the resistance to precipitation of δ-ferrite, mirror polishing properties, embossing processing properties, and the thermal conductivity were performed. The test method will be described below.

### <Tempering hardness>

A square bar having a dimension of 15 mm x 15 mm x 25 mm was cut out as a test piece and a test for tempering hardness was performed. Specifically, the test piece was subjected to quenching by heating to 1,030°C, holding for 60 minutes and then rapidly cooling. Thereafter, the test piece was subjected to tempering at a temperature of from 450°C to 600°C for 2 hours. The hardness thereof was measured in accordance with Rockwell C scale (HRC) and the maximum hardness obtained in the temperature range at the time of tempering was taken as the tempering hardness.

### <Resistance to precipitation of perlite>

The resistance to precipitation of perlite was evaluated in a test simulating the quenching of a mold. Specifically, a test piece having an approximate shape with a dimension of φ4 mm x 10 mm was heated to 1,030°C, held for 15 minutes, and then cooled to room temperature (25°C) at a predetermined cooling rate. Then, the test piece after cooling was cut, the structure of the cut surface was observed, and then the presence or absence of perlite was determined. The resistance to precipitation of perlite was evaluated based on a maximum cooling rate A (°C/min) at which precipitation of perlite was observed. That is, the evaluation is performed such that a case where A was less than 5 was marked as (S) which means that perlite was particularly unlikely to be precipitated; a case where A was 5 or more to less than 10 was marked as (A) which means that perlite was unlikely to be precipitated; a case where A was 10 or more to less than 30 was marked as (B) which means that perlite was slightly easily precipitated; and a case where A was more than or equal to 30 was marked as (C) which means that perlite was easily precipitated.

### <Impact value>

The impact value was evaluated by performing a test simulating a case where a large mold was subjected to quenching by using equipment with low performance. Specifically, a square bar having a dimension of 11 mm x 11 mm x 60 mm was used, and the square bar was subjected to quenching by cooling at 50°C/min in a temperature range of from 1,030°C to 550° and at 2°C/min in a temperature range of from 550°C to 100°C, and then subjected to tempering at a temperature range of from 450°C to 600°C for 2 hours. As the tempering temperature, a temperature at which the maximum hardness can be obtained in respective steels was selected. The square bar after these treatment was processed into a test piece having an approximate dimension of 10 mm x 10 mm x 55 mm with a notch (the radius of an R portion at a tip end was 1 mm), and an impact value E (J/cm²) at room temperature (25°C) was measured in accordance with a Charpy impact test. In regard to the obtained impact value E, the evaluation was performed such that a case where E was more than or equal to 35 was marked as (S) which means the impact value was particularly high; a case where E was in the range of 20 or more to less than 35 was marked as (A) which means that the impact value was high; a case where E was in the range of 10 or more to less than 20 was marked as (B) which means that the impact value was small; and a case where E was less than 10 was marked as (C) which means that the impact value was extremely small.

### <Resistance to precipitation of δ-ferrite>

The test pieces for tests of the resistance to precipitation of δ-ferrite, the corrosion resistance, the mirror polishing properties, the embossing processing properties, and the thermal conductivity were subjected to rapid quenching and tempering. Specifically, the test pieces were subjected to quenching by rapid cooling after soaking at 1,030°C for 1 hour, and then subjected to tempering at a temperature of from 450°C to 600°C for 2 hours. As the tempering temperature, a temperature at which the maximum hardness was obtained in respective steels was selected.

A surface of the thus obtained test piece, which corresponds to a surface in parallel with the longitudinal direction of a block material before being cut out as a test piece was polished. The polished test piece was allowed to be corroded with acid and then the structure thereof was observed by using an optical microscope. At this time, the evaluation is performed such that a case where δ-ferrite was not observed was marked as (A) which means that δ-ferrite was unlikely to be precipitated and a case where δ-ferrite was observed was set as (C) which means that δ-ferrite was easily precipitated.

### <Corrosion resistance>

A wetting test was performed on the test pieces subjected to rapid quenching and tempering as described above, and the corrosion resistance was evaluated. Specifically, the rust situation was visually observed after the test pieces subjected to mirror polishing were left to stand in an environment of a humidity of 98% and a temperature of 50°C for 24 hours. The evaluation was performed such that a case where the rust was not almost generated was set as (S) which means that the corrosion resistance was extremely high; a case where the rust was slightly generated was marked as (A) which means that the corrosion resistance was high; a case where the rust was quite noticeable was marked as (B) which means that the corrosion resistance was low; and a case where the test piece was deeply rusted was marked as (C) which means that the corrosion resistance was extremely low.

### <Mirror polishing properties>

Polishing was performed up to abrasive grains of count #50000 on the test pieces subjected to rapid quenching and tempering as described above, and the presence or absence of structures regarded as defects such as waviness and pinholes was observed. The evaluation was performed such that a case where such structures were not almost present was marked as (S: excellent as a mold) which means that the mirror polishing properties were extremely high; a case where such structures were not many was amrked as (A: usable as a mold) which means that the mirror polishing properties were high; a case where such structures were noticeable was marked as (B: not usable as a mold in many cases) which means that the mirror polishing properties were low; and a case where there were a lot of such structures was marked as (C: not usable as a mold) which means that the mirror polishing properties were extremely low.

### <Embossing processing properties>

The test pieces subjected to rapid quenching and tempering as described above were subjected to mirror polishing, corroded with a chemical solution, and then subjected to embossing processing. The embossing state was observed at this time, and the evaluation was performed such that a case where there was no embossing unevenness was marked as (A) which means that the embossing processing properties were excellent; a case where embossing unevenness was slightly generated was marked as (B) which means that the embossing processing properties were slightly degraded; and a case where embossing unevenness was largely generated was marked as (C) which means that the embossing processing properties were poor.

### <Thermal conductivity>

The thermal conductivity λ (W/m/K) was measured by means of the laser flash method. That is, a test piece was irradiated with laser light and temperature change ΔT of the rear surface of the test piece at this time was measured by using thermocouples. When the mass of the test piece was set as M, the thickness thereof was set as L, and the heat energy provided for the test piece due to irradiation with laser was set as Q, specific heat Cp of the sample was calculated from a relationship of "Cp = Q/(M·ΔT)[J/(kg·K)]. Further, the time (t_{1/2}) reaching half of the maximum value of the temperature change in the test piece was measured by using an infrared detector installed on the surface side of the test piece, and a thermal diffusivity α of the test piece was calculated from a relationship of "α = 0.1388 x L²/(t_{1/2})[m²/s]." Further, the thermal conductivity λ of the sample was calculated from a relationship of "λ = Cₚ·α·ρ [W/(m·K)]." The measurement was performed at 25°C. The thermal conductivity was evaluated such that a case where λ was more than or equal to 22 was marked as (S) which means that the thermal conductivity was extremely high; a case where λ was in the range of 20 or more to less than 22 was marked as (A) which means that the thermal conductivity was high; a case where λ was in the range of 19 or more to less than 20 was marked as (B) which means that the thermal conductivity was low; and a case where λ was less than 19 was marked as (C) which means that the thermal conductivity was extremely low.

Component compositions of the steels for a mold according to respective Examples and Comparative Examples are listed in Tables 1 and 2, and various test results are listed in Tables 3 and 4. The columns of "-0.1Cr + 1.1 < Mn < -0.1 Cr + 1.5" and "N < -0.04 V + 0.05" indicates the prescribed ranges of the content of Mn calculated from the amount of Cr actually contained and the preferred ranges of the content of N calculated from the amount of V actually contained, respectively.

**Table 1**

| | | C | Si | Cr | Mn | Mo | V | N | Other components | -0.1Cr + 1.1 < Mn < -0.1Cr + 1.5 | N < -0.04V + 0.05 |
|---|---|---|---|---|---|---|---|---|---|---|---|
| | Steel 1 | 0.33 | 0.23 | 7.95 | 0.55 | 0.58 | 0.58 | 0.017 | | 0.31<Mn<0.71 | N<0.027 |
| | Steel 2 | 0.32 | 0.24 | 7.96 | 0.46 | 0.49 | 0.61 | 0.015 | | 0.30<Mn<0.70 | N<0.026 |
| | Steel 3 | 0.29 | 0.25 | 7.97 | 0.45 | 0.50 | 0.60 | 0.012 | | 0.30<Mn<0.70 | N<0.026 |
| | Steel 4 | 0.28 | 0.13 | 7.50 | 0.65 | 0.26 | 0.53 | 0.027 | | 0.35<Mn<0.75 | N<0.029 |
| | Steel 5 | 0.31 | 0.15 | 7.65 | 0.61 | 0.38 | 0.57 | 0.023 | 0.029Nb | 0.34<Mn<0.74 | N<0.027 |
| | Steel 6 | 0.34 | 0.26 | 7.94 | 0.53 | 0.74 | 0.59 | 0.021 | 0.42A1 | 0.31<Mn<0.71 | N<0.026 |
| | Steel 7 | 0.35 | 0.29 | 8.21 | 0.45 | 0.52 | 0.74 | 0.005 | 0.93W | 0.28<Mn<0.68 | N<0.020 |
| | Steel 8 | 0.31 | 0.31 | 8.35 | 0.41 | 0.65 | 0.67 | 0.013 | 1.97Co | 0.27<Mn<0.67 | N<0.023 |
| | Steel 9 | 0.32 | 0.39 | 8.49 | 0.37 | 0.69 | 0.69 | 0.011 | 1.51W, 0.98Co | 0.25<Mn<0.65 | N<0.022 |
| Examples | Steel 10 | 0.33 | 0.08 | 7.80 | 0.57 | 0.79 | 0.65 | 0.014 | 0.97Ni | 0.32<Mn<0.72 | N<0.024 |
| | Steel 11 | 0.29 | 0.10 | 7.03 | 0.78 | 0.56 | 0.51 | 0.029 | 0.77Cu | 0.40<Mn<0.80 | N<0.030 |
| | Steel 12 | 0.30 | 0.34 | 7.18 | 0.73 | 0.61 | 0.55 | 0.025 | 0.62Ni, 0.51Cu | 0.38<Mn<0.78 | N<0.028 |
| | Steel 13 | 0.32 | 0.36 | 7.34 | 0.69 | 0.30 | 0.62 | 0.019 | 0.013S | 0.37<Mn<0.77 | N<0.025 |
| | Steel 14 | 0.33 | 0.18 | 8.08 | 0.49 | 0.34 | 0.63 | 0.016 | 0.17Bi | 0.29<Mn<0.69 | N<0.025 |
| | Steel 15 | 0.29 | 0.21 | 8.78 | 0.29 | 0.42 | 0.71 | 0.009 | 3.02Ni, 1.01Cu, 0.99Al | 0.22<Mn<0.62 | N<0.022 |
| | Steel 16 | 0.30 | 0.24 | 8.63 | 0.33 | 0.46 | 0.73 | 0.007 | 0.021Ti, 0.0012B | 0.24<Mn<0.64 | N<0.021 |

**Table 2**

| | | C | Si | Cr | Mn | Mo | V | N | Other components | -0.1Cr + 1.1 < Mn < -0.1Cr + 1.5 | N < -0.04V + 0.05 |
|---|---|---|---|---|---|---|---|---|---|---|---|
| | Steel 17 | 0.33 | 0.36 | 5.02 | 0.11 | 0.12 | 0.58 | 0.018 | | 0.60<Mn<1.00 | N<0.027 |
| | Steel 18 | 0.35 | 0.37 | 9.97 | 0.13 | 0.11 | 0.79 | 0.017 | | 0.10<Mn<0.50 | N<0.018 |
| | Steel 19 | 0.23 | 0.38 | 9.98 | 0.12 | 0.97 | 0.79 | 0.011 | | 0.10<Mn<0.50 | N<0.018 |
| | Steel 20 | 0.34 | 0.39 | 9.98 | 1.19 | 0.51 | 0.62 | 0.013 | | 0.10<Mn<0.50 | N<0.025 |
| | Steel 21 | 0.24 | 0.02 | 5.01 | 1.18 | 0.98 | 0.52 | 0.012 | | 0.60<Mn<1.00 | N<0.029 |
| Comparative Example | Steel 22 | 0.35 | 0.37 | 5.03 | 0.57 | 0.99 | 0.78 | 0.162 | | 0.60<Mn<1.00 | N<0.019 |
| | Steel 23 | 0.13 | 0.44 | 0.25 | 1.48 | 0.27 | 0.01 | 0.002 | 3.04Ni, 1.02Cu, 1.00Al | 1.08<Mn<1.48 | N<0.050 |
| | Steel 24 | 0.39 | 1.01 | 13.49 | 0.43 | 0.11 | 0.23 | 0.019 | | 0.00≤Mn<0.15 | N<0.041 |
| | Steel 25 | 0.38 | 0.98 | 5.23 | 0.43 | 1.21 | 0.89 | 0.019 | | 0.58<Mn<0.98 | N<0.014 |
| | Steel 26 | 1.01 | 0.99 | 8.03 | 0.42 | 2.01 | 0.28 | 0.016 | | 0.30<Mn<0.70 | N<0.039 |

**Table 3**

| | | Hardness (HRC) | Perlite precipitation | Impact value | Corrosion resistance | δ-ferrite precipitation | Mirror polishing properties | Embossing processing properties | Thermal conductivity |
|---|---|---|---|---|---|---|---|---|---|
| | Steel 1 | 52 | A | S | A | A | S | A | S |
| | Steel 2 | 51 | A | S | A | A | S | A | S |
| | Steel 3 | 50 | A | S | A | A | S | A | S |
| | Steel 4 | 49 | A | S | A | A | S | A | S |
| | Steel 5 | 50 | A | S | A | A | S | A | S |
| | Steel 6 | 53 | A | S | A | A | S | A | S |
| | Steel 7 | 54 | A | S | A | A | S | A | S |
| Examples | Steel 8 | 50 | A | S | A | A | S | A | S |
| | Steel 9 | 51 | A | S | A | A | S | A | S |
| | Steel 10 | 52 | A | S | A | A | S | A | S |
| | Steel 11 | 53 | A | S | A | A | S | A | S |
| | Steel 12 | 50 | A | S | A | A | S | A | S |
| | Steel 13 | 51 | A | A | A | A | A | A | S |
| | Steel 14 | 52 | A | S | A | A | S | A | S |
| | Steel 15 | 50 | A | S | A | A | S | A | S |
| | Steel 16 | 50 | A | S | A | A | S | A | S |

**Table 4**

| | | Hardness (HRC) | Perlite precipitation | Impact value | Corrosion resistance | δ-ferrite precipitation | Mirror polishing properties | Embossing processing properties | Thermal conductivity |
|---|---|---|---|---|---|---|---|---|---|
| | Steel 17 | 51 | A | B | B | A | S | A | S |
| | Steel 18 | 51 | C | S | A | A | A | B | A |
| | Steel 19 | 47 | B | S | S | C | A | B | A |
| | Steel 20 | 51 | A | S | A | A | C | B | B |
| Comparative Example | Steel 21 | 48 | S | A | B | A | S | A | S |
| | Steel 22 | 53 | A | C | B | A | B | A | A |
| | Steel 23 | 39 | S | B | C | A | C | A | S |
| | Steel 24 | 53 | C | C | s | A | A | C | C |
| | Steel 25 | 55 | A | B | B | A | S | A | S |
| | Steel 26 | 62 | B | C | B | A | C | A | C |

First, the characteristics are examined with respect to respective steels according to Comparative Examples. Hereinafter, when deteriorated characteristics are present in steels according to respective Comparative Examples, the main reasons are considered, but the characteristics of steel materials depend on the composition as a whole and the reasons do not necessarily depend on the amounts of specific component elements.

Steel 17 was inferior in impact value and corrosion resistance. It is considered that coarse bainite was easily precipitated at the time of slow quenching mainly because of the small contents of Cr and Mn, and thus the impact value was small. In addition, since the content of Cr was small, stable passive films were unlikely to be formed and the corrosion resistance was impaired.

Steel 18 was inferior in resistance to precipitation of perlite and embossing processing properties. It is considered that perlite was easily precipitated because carbides are easily precipitated which is because the content of Cr was excessively large whereas the content of C was relatively large and the content of Mn was relatively small. Further, the reason why the embossing processing properties were degraded is that Cr was significantly segregated due to the large content of Cr.

Steel 19 was inferior in resistance to precipitation of perlite, resistance to precipitation of δ-ferrite, and embossing processing properties. In addition, the hardness indicated a relatively small value as hardness required for steel for a mold. It is considered that perlite was easily precipitated because, as is similar to the steel 18, the content of Cr was excessively large whereas the content of Mn was relatively small. Moreover, the reason why δ-ferrite was easily precipitated is that Cr, Mo, and V serving as ferrite stabilizing elements were excessively contained and Si was also relatively largely contained. The precipitation of δ-ferrite was accelerated also by the fact that the contents of C and Mn serving as austenite stabilizing elements were small. Further, the embossing processing properties were degraded because the content of Cr was large. The hardness was low because of the small content of C. Incidentally, the corrosion resistance became very excellent because the contents of Cr and Mo were large and the content of C was small.

Steel 20 was inferior in mirror polishing properties, embossing processing properties, and the thermal conductivity. It is considered that the mirror polishing properties and the embossing properties were degraded because the segregation occurred due to the large contents of Mn and Cr and thus the waviness was easily generated. The reason why the thermal conductivity was low is that the contents of Mn or Cr solid-dissolved in a matrix were large.

Steel 21 was inferior in corrosion resistance. Further, the hardness indicated a relatively small value as hardness required for steel for a mold. It is considered that the corrosion resistance was low because, as is similar to the steel 17, the content of Cr was small. Further, the hardness was low because of the small contents of C and Si. Further, in this kind of steel, the spheroidizing annealing properties were also poor and softening of the steel material by annealing was difficult. It is considered that this is because the contents of Mn and Cr were small and aggregation and coarsening of carbides were slow.

Steel 22 was inferior in impact value, corrosion resistance, and mirror polishing properties. It is considered that the impact value was low because coarse bainite was easily precipitated at the time of slow quenching due to the small contents of Cr and Mn as is similar to the steel 17, and in addition, coarse carbonitrides of V increased due to the excessively large contents of V and N and also large content of C, which became the starting point of a fracture. The reason why the corrosion resistance was low is that the content of Cr was small. Further, the mirror polishing properties were low because of generation of pinholes due to the drop off of the above-described coarse carbonitrides in addition to the influence of waviness due to the segregation.

Steels 23 to 26 are commercially available steels for a mold. Steel 23 was inferior in hardness, impact value, corrosion resistance, and mirror polishing properties. The hardness was small because of extremely small content of C. Further, the impact value and the corrosion resistance were small because the contents of Cr and Mn were small. The mirror polishing properties were low because pinholes were easily generated due to the drop off of inclusions due to the small hardness in addition to the fact that the waviness due to the segregation of Ni, Cu, or Al was easily generated.

Steel 24 is SUS420J2. This kind of steel was inferior in resistance to precipitation of perlite, impact value, embossing processing properties, and thermal conductivity. These are mainly due to the large contents of C, Si, and Cr. Further, since the carbides were easily precipitated on the grain boundaries, the impact value became low.

Steel 25 is JIS SKD61. The impact value was small and the corrosion resistance was also low mainly because the contents of Mn and Cr were small.

Steel 26 had extremely high hardness due to the large contents of C, Si, and Mo. However, the steel 26 was inferior in resistance to precipitation of perlite, impact value, corrosion resistance, mirror polishing properties, and thermal conductivity mainly due to the large contents of C, Si, and Cr. The large amount of coarse Cr-based crystallization carbides and the large amount of solid-dissolved elements were the reasons for degrading various characteristics.

In contrast to respective kinds of steels according to Comparative Examples, the kinds of steels according to Example of the present invention all possessed hardness more than or equal to 49 HRC and had characteristics of the resistance to precipitation of perlite, the high impact value at the time of slow quenching, the corrosion resistance, the resistance to precipitation of δ-ferrite, the mirror polishing properties, the embossing processing properties, and the thermal conductivity in high levels. Further, in regard to the steel 13, since S was contained and present in the steel as MnS, the impact value and the mirror polishing properties were slightly low, but these were sufficiently excellent characteristics practically as the steel for a mold.

As described above, it was found that when the contents of C, Si, Cr, Mn, Mo, V, and N are in the predetermined ranges and particularly the contents of Cr and Mn satisfy a predetermined relationship, the above-described various characteristics are improved in a well-balanced manner as compared to conventional steels.

While the present invention has been described in detail and with reference to specific embodiments thereof, it will be apparent to one skilled in the art that various changes and modifications can be made therein without departing from the spirit and scope of the present invention.

The present application is based on Japanese Patent Application No. 2014-045098 filed on March 7, 2014, and the contents thereof are incorporated herein by reference.

## Claims

1. A steel for a mold, comprising, on a % by mass basis:
more than 0.27% to less than 0.36% of C;
more than 0.07% to less than 0.40% of Si;
more than 7.00% to less than 8.80% of Cr;
more than 0.25% to less than 0.80% of Mo;
more than 0.50% to less than 0.75% of V;
more than 0.0005% to less than 0.05% of N; and
Mn,
with the balance being Fe and inevitable impurities,
wherein an expression of "-0.1Cr + 1.10 < Mn < -0.1Cr + 1.50" is satisfied.

2. The steel for a mold according to claim 1, wherein an expression of "N < -0.04V + 0.050" is satisfied.

3. The steel for a mold according to claim 1 or 2, further comprising one or two kinds selected from, on a % by mass basis:
more than 0.10% to 4.00% or less of W and
more than 0.10% to 3.00% or less of Co.

4. The steel for a mold according to any one of claims 1 to 3, further comprising one or more kinds selected from, on a % by mass basis:
more than 0.004% to 0.100% or less of Nb;
more than 0.004% to 0.100% or less of Ta;
more than 0.004% to 0.100% or less of Ti; and
more than 0.004% to 0.100% or less of Zr.

5. The steel for a mold according to any one of claims 1 to 4, further comprising, on a % by mass basis:
more than 0.10% to less than 1.2% of Al.

6. The steel for a mold according to any one of claims 1 to 5, further comprising one or two kinds selected from, on a % by mass basis:
more than 0.30% to 3.5% or less of Ni and
more than 0.30% to 1.5% or less of Cu.

7. The steel for a mold according to any one of claims 1 to 6, further comprising, on a % by mass basis:
more than 0.0001% to 0.0050% or less of B.

8. The steel for a mold according to any one of claims 1 to 7, further comprising one or more kinds selected from, on a % by mass basis:
more than 0.003% to 0.050% or less of S;
more than 0.0005% to 0.2000% or less of Ca;
more than 0.03% to 0.50% or less of Se;
more than 0.005% to 0.100% or less of Te;
more than 0.01% to 0.50% or less of Bi; and
more than 0.03% to 0.50% or less of Pb.

9. The steel for a mold according to any one of claims 1 to 8, further comprising one or two kinds selected from, on a % by mass basis:
up to 4.00% or less of W and
up to 3.00% or less of Co.

10. The steel for a mold according to any one of claims 1 to 9, further comprising one or more kinds selected from, on a % by mass basis:
up to 0.100% or less of Nb;
up to 0.100% or less of Ta;
up to 0.100% or less of Ti; and
up to 0.100% or less of Zr.

11. The steel for a mold according to any one of claims 1 to 10, further comprising, on a % by mass basis:
up to less than 1.2% of Al.

12. The steel for a mold according to any one of claims 1 to 11, further comprising one or two kinds selected from, on a % by mass basis:
up to 3.5% or less of Ni and
up to 1.5% or less of Cu.

13. The steel for a mold according to any one of claims 1 to 12, further comprising, on a % by mass basis:
up to 0.0050% or less of B.

14. The steel for a mold according to any one of claims 1 to 13, further comprising one or more kinds selected from, on a % by mass basis:
up to 0.050% or less of S;
up to 0.2000% or less of Ca;
up to 0.50% or less of Se;
up to 0.100% or less of Te;
up to 0.50% or less of Bi; and
up to 0.50% or less of Pb.

15. The steel for a mold according to any one of claims 1 to 14, having a thermal conductivity at 25°C of 20 W/m/K or more.
